(19) Europäisches Patentamt
European Patent Office
Office européen des brevets

(11) Publication number : 0 483 095 A2

(12) EUROPEAN PATENT APPLICATION

(21) Application number : 91870153.3

(22) Date of filing : 03.10.91

(51) Int. Cl.$^5$ : A01N 57/20, // (A01N57/20, 25:30)

(30) Priority : 04.10.90 US 593719

(43) Date of publication of application : 29.04.92 Bulletin 92/18

(84) Designated Contracting States : AT BE CH DE DK ES FR GB GR IT LI LU NL SE

(71) Applicant : MONSANTO COMPANY
800 North Lindbergh Boulevard
St. Louis Missouri 63167 (US)

(72) Inventor : Kuchikata, Masuo
158-1 Sanuki-Machi
Ryugasaki-City, Ibaraki (JP)
Inventor : Sato, Tatsuo
1-36-38 Midorigaoka
Chofu-City, Tokyo (JP)

(74) Representative : Bosch, Henry et al
Monsanto Services International S.A. Patent Department, Avenue de Tervuren 270/272, Letter Box No. 21
B-1150 Brussels (BE)

# (54) Improved formulations.

(57) This invention relates to a storage stable aqueous formulation, agriculturally acceptable glyphosate herbicide composition, to a method of use for killing or controlling weeds and to a process for preparing such compositions.

EP 0 483 095 A2

## Field of the Invention

This invention relates to a storage stable aqueous formulation containing glyphosate herbicide having enhanced stability properties, to a process for preparing such compositions, and to a herbicidal method of use of such compositions.

## Description of the Prior Art

N-phosphonomethylglycine, whose common name is glyphosate, is well known in the art as a highly effective herbicide. It is also known that glyphosate, an organic acid, has a low solubility in water. Glyphosate is typically formulated as a water-soluble salt, especially as the mono-isopropylamine (IPA) salt to kill or control weeds or plants. Glyphosate is typically sold commercially as an aqueous concentrate in the form of its IPA salt by Monsanto Company under the trademark Roundup.

Various salts of glyphosate, methods for preparing such salts of glyphosate, formulations of glyphosate and methods of use for killing and controlling weeds and plants are disclosed in U.S. Patents 3,799,758 and 4,405,531 issued to John E. Franz on March 26, 1974 and September 20, 1983, respectively. Other U.S. Patents which disclose salts of glyphosate include US 4,315,765 issued to George B. Large on February 16, 1982, US 4,507,250 issued to Izhak Bakel on March 26, 1985, US 4,397,676 issued to Izhak Bakel on August 9, 1983, US Patent 4,481,026 issued to Michael P. Prisbylla on November 6, 1984 and, US 4,140,513 issued to Erhard J. Prill on February 20, 1979. The aforementioned patents are incorporated herein in their entireties by reference thereto.

The use of an organosilicone surfactant, such as Silwet® L-77 sold by Union Carbide Company, in tank mixes with commercially purchased Roundup herbicide improves the rainfastness of the resulting tank mix with Roundup on some species of weeds.

Monsanto sells Pulse brand penetrant (which is Silwet® L-77) for tank mix use with Roundup herbicide. The label of Pulse penetrant discloses that the addition of Pulse penetrant can reduce the rainfree period after application of Roundup herbicide for best activity from 4-6 hours to 2 hours on perennial ryegrass when recommended rates of Roundup herbicide and Pulse penetrant are sprayed on dry foliage.

L. Janzen, "Enhancement of Herbicides by Silicone Surfactants" Volume 21, Issue 2 (March) 1983, *WEED SCIENCE*, discloses that in a comparative evaluation of adjuvant effects in eight species, nonionic silicone glycol surfactants enhanced the activity of six herbicides to a greater extent than a standard organic surfactant, whereas cationic amino silicone surfactants enhanced to a lesser extent.

As mentioned above, organosilicones are sold commercially under the trademark Silwet® by Union Carbide. In particularly, SILWET Surfactants L-77, L-720, L-7001, L-7500, L-7600, L-7602, L-7604, L-7605, and L-7607 are exempted by the Environmental Protection Agency (EPA) [40 CRF 180,1001(c)] from the requirement of a residue tolerance, when used in accordance with good agricultural practice as inert ingredients in pesticide formulations applied to growing crops or to raw agricultural commodities after harvest.

## Summary of the Invention

There is provided a novel and useful composition containing a glyphosate based herbicide, a silicone copolymer wetting agent and an amphoteric or cationic surfactant.

The amount of silicone based polymer wetting agent in the herbicide containing composition is in the range from about 0.1 to about 50 by weight of the composition, preferably in the range from about 1 to about 25 by weight of the composition.

The amount of amphoteric or cationic surfactant in the herbicide containing composition is in the range from about 1 to about 50 by weight of the composition and preferably in the range from about 5 to about 30 by weight of the composition.

Compositions of this invention may optionally further comprise suitable at effective amounts of ammonium sulfate, potassium sulfate, potassium chloride, sodium sulfate, urea, ammonium phosphate mixtures thereof and the like. The composition may optionally include a synergist, quick-burn additive, a humectant, a co-herbicide, a dye, pigment, corrosion inhibitor, thickener, dispersing agent, calcium sequestrant, defoamer, mixtures thereof and like additiments.

In another embodiment of this invention, the novel composition is prepared by admixing an agriculturally acceptable salt of N-phosphonomethylglycine with one or more amphoteric or cationic surfactant(s) and an organosilicone block copolymer. The glyphosate salt preferably is the isopropylamine, ammonium salt or an alkali metal salt with sodium being the preferred alkali metal salt.

Objects of the Invention

It is an object of this invention to provide a storage stable liquid glyphosate herbicide, a process for preparing this composition and a herbicidal method of use for killing and controlling weeds by applying a herbicidally effective amount of the composition to the locus of the plant or weed to be killed or controlled.

Detailed Description of the Invention

This invention comprises a storage stable glyphosate based, herbicidal composition containing an effective amount of an organosilicone wetting agent and a cationic or amphoteric surfactant.

Illustrative types of amphoteric surfactants which may be employed in this inventions include:

amine oxides

a) trialkylamine oxides
  i) lauryl dimethyl amine oxide
  ii) stearyl dimethyl amine oxide
b) dihydroxyethyl alkyl amine oxide
  i) dihydroxyethyl octyl amine oxide
  ii) dihydroxyethyl dodecyl amine oxide
  iii) dihydroxyethyl tallowamine oxide
c) di(polyhydroxyethylene) alkyl amine oxide
  i) bis(polyoxyethylene) tallowamine oxide
d) loweralkyl polyoxyethylene alkyl amine oxide
  i) methyl polyoxyethylene (2 mole) cocoamine oxide

Illustrative types of cationic surfactants which may be employed in this invention include:

1. quaternized long chain amines:
  a) alkyl, triloweralkyl ammonium chloride
    i) trimethyl coco ammonium chloride (coco = $C_{12}$-$C_{15}$ alkyl)
    ii) trimethyl octadecyl ammonium chloride
  b) diloweralkyl, alkyl, benzalkonium chloride
  i) dimethyl, coco benzalkonium chloride
2. quaternized polyoxyalkylenated long chain amines:
  a) dialkyl dihydroxyethyl ammonium chloride
    i) methyl bis (2-hydroxyethyl) coco ammonium chloride
    ii) methyl bis(2-hydroxyethyl) lauryl ammonium chloride
    iii) methyl bis(2-hydroxyethyl) oleyl ammonium chloride
  b) alkyl di(polyoxyethylene) lower alkyl ammonium chloride
    i) methyl bis(omegahydroxypoly-(oxyethylene)coco) ammonium chloride where the polyoxyethylene is derived from 3-20 moles of ethylene oxide
    ii) methyl bis(omegahydroxypoly (oxyethylene)oleyl) ammonium chloride where the polyoxyethylene is derived from 3-20 moles of ethylene oxide
  c) hydroxyalkyl polyoxyethylene diloweralkyl ammonium chloride
    i) hydroxyethyl dimethyl polyoxyethylene (2 moles) ammonium chloride
3. quaternized pyridines
  i) N-octyl pyridine chloride
  ii) N-dodecyl pyridine chloride
4. trialkyl betaines
  a) alkyl, diloweralkyl betaines
    i) lauryl dimethyl betaine
    ii) stearyl dimethyl betaine
    iii) coco dimethyl betaine
    iv) decyl dimethyl betaine
5. tertiary amines
  a) bis(polyoxyethylene) alkylamine
    i) bis(polyoxyethylene) tallowamine where the polyoxyethylene is derived from 2-30 moles of ethylene oxide.
    ii) bis(polyoxyethylene) cocoamine where the polyoxyethylene is derived from 2-30 moles of ethylene oxide

Other general class, subclasses and species of amine oxides, quaternary ammonium salts and tertiary

amines useful in the practice of the present invention will be known to those skilled in the art. Certain amine oxides, quaternary ammonium salts and tertiary amines will provide for more stable formulations than others and those skilled in the art will be able to readily optimize formulations of the present invention by selection of suitable quaternary ammonium salts and by varying the concentration of the formulation ingredients.

Amine oxides, quaternary ammonium salts and tertiary amines useful in the formulation of the present invention are commercially available from a number of manufacturers and are generally described in McCutcheon's Detergents and Emulsifiers, North American Edition 1985 Annual and in McCutcheon's Detergent and Emulsifiers International Edition 1985.

The formulations may optionally contain a solvent. A suitable class of solvent is polyalkylene glycol. Suitable solvents are ethylene glycol, propylene glycol, diethylene glycol, dipropylene glycol, polyethylene glycol, polypropylene glycol or polyethylene-polypropylene glycol copolymer.

One preferred class of silicone wetting agent has the average formula

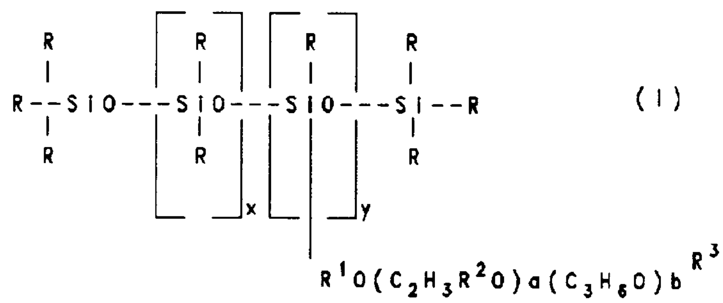

(I)

where each R is independently a monovalent hydrocarbyl radical, $R^1$ is a divalent hydrocarbylene radical, $R^2$ is independently hydrogen or a lower hydroxyalkyl radical, $R^3$ is hydrogen or a monovalent hydrocarbyl radical, x, y, a and b are integers independently greater than or equal to zero.

Preferably in compounds of Formula I, R and $R^3$ are $-CH_3$, $R^1$ is $-C_3H_6-$, $R^2$ is hydrogen, x is zero or one, y is one to five, a is five to 20 and b is zero.

Organosilicones of Formula I above is generally described in the above-mentioned Union Carbide Corp. product literature and in U.S. Pat. Nos. 3,505,377, 3,980,688, and 4,431,789, the disclosures of which are incorporated herein by reference. Several of such ethoxylated wetting agents are available form Union Carbide Corp. as SILWET surface active copolymers. Preferred SILWET surface active copolymers include SILWET L-77, L-7600, L-7602 and L-7607. SILWET L-77 is an especially preferred ethoxylated wetting agent. It is believed to have Formula I above, where R and $R^3$ are $-CH_3$, $R^1$ is $-C_3H_6-$, $R^2$ is hydrogen, x is zero or one, y is one or two, a is about seven and b is zero.

The glyphosate salt component of a compositions of this invention may be preferably prepared by admixing various bases (acid acceptors) including those selected from those listed below with glyphosate wetcake or moistened glyphosate, ammonium hydroxide, and alkali metal carbonates, bicarbonates, meta borates, citrates, formates, oxalates, phosphates, propionates, pyrophosphates, metasilicates, orthosilicates, sulfites, thiosulfates, tetraborate, monoacid phosphates, tripolyphosphates, metaphosphates, sodium hydroxide, potassium hydroxide, tetrasodium EDTA, mixtures thereof and the like. Mixtures of glyphosate and salts thereof may be employed as glyphosate based materials in this invention.

Preferable agriculturally acceptable salts of N-phosphonomethylglycine include the ammonium, isopropylamine, trimethylsulfonium, imminourea salts, sodium, potassium, mixtures thereof and the like. The IPA salt, sodium, potassium and ammonium salts of N-phosphonomethylglycine are especially preferred in this invention. Mixtures of water soluble salts of N-phosphonomethylglycine may be employed herein, as well as surfactant salts of N-phosphonomethylglycine including, for example, a N,N-bis(hydroxyethylcocoamine) salt of N-phosphonomethylglycine.

In another embodiment the composition of this invention further comprises ammonium sulfate, potassium sulfate, potassium chloride, sodium sulfate, urea, ammonium phosphate mixtures thereof and the like.

The salt of N-phosphonomethylglycine may be prepared by admixing an acid acceptor with N-phosphonomethylglycine (containing in the range from about 10 to about 15 wt % water) to neutralize the N-phosphonomethylglycine. A slight excess of acid acceptor may be preferred, (however it is not required when ammonium hydroxide or ammonium bicarbonate is the base.)

When the composition of this invention includes a liquid wetting agent the process of preparation comprises admixing said water soluble, agriculturally acceptable salt of N-phosphonomethylglycine and said one or more liquid wetting agents optionally with ammonium sulfate and thereafter blending these ingredients singly or collectively to form an admixed composition as a composition of this invention.

Table 1 illustrates various storage stable (at -5°C and 60°C) formulations of this invention. Column 1 is the example number, column 2 provides the chemical name of the surfactant, following column 3 discloses the % active in the surfactant, and column 4 provides the weight ratio in grams per liter of glyphosate acid equivalent to Silwet L-77 to surfactant. All of the formulations in Table 1 showed acceptable stability in one week at -5°C and 60°C.

**Table 1**

| Example No. | Chemical Name of Surfactant | Active % | Composition (g/l) | |
|---|---|---|---|---|
| 1. | lauryl dimethyl amine oxide | 35 | Glyphosate | 115 |
| | | | SILWET L-77 | 310 |
| | | | Surfactant | 380 |
| | | | Dipropylene Glycol | 50 |
| | | | Water | remaining |
| 2. | ditto | 35 | Glyphosate | 180 |
| | | | SILWET L-77 | 17 |
| | | | Surfactant | 80 |
| | | | Water | remaining |
| 3. | ditto | 35 | Glyphosate | 180 |
| | | | SILWET L-77 | 25 |
| | | | Surfactant | 100 |
| | | | Water | remaining |
| 4. | ditto | 35 | Glyphosate | 360 |
| | | | SILWET L-77 | 34 |
| | | | MON 0818 | 170 |
| | | | Surfactant | 60 |
| | | | Polyethylene glycol #400 | 30 |
| | | | Water | remaining |
| 5. | N-octyl pyridinium chloride | 45 | Glyphosate | 144 |
| | | | SILWET L-77 | 250 |
| | | | Surfactant | 300 |
| | | | Water | remaining |

| | | | | |
|---|---|---|---|---|
| 6. | ditto | 45 | Glyphosate | 144 |
| | | | SILWET L-77 | 250 |
| | | | Surfactant | 266 |
| | | | Dipropylene Glycol | 50 |
| | | | Water | remaining |
| 7. | ditto | 45 | Glyphosate | 115 |
| | | | SILWET L-77 | 310 |
| | | | Surfactant | 347 |
| | | | Water | remaining |
| 8. | lauryl di(hydroxyethyl) methyl ammonium chloride | 75 | Glyphosate | 300 |
| | | | SILWET L-77 | 60 |
| | | | Surfactant | 200 |
| | | | Water | remaining |
| 9. | ditto | 75 | Glyphosate | 206 |
| | | | SILWET L-77 | 160 |
| | | | Surfactant | 230 |
| | | | Water | remaining |
| 10. | lauryl trimethyl ammonium chloride | 29 | Glyphosate | 144 |
| | | | SILWET L-77 | 250 |
| | | | Surfactant | 400 |
| | | | Dipropylene Glycol | 50 |
| | | | Water | remaining |
| 11. | dialkyl dihydroxyethyl ammonium chloride | 70 | Glyphosate | 165 |
| | | | SILWET L-77 | 197 |
| | polyoxy ethylene alkyl phenyl ether | 10 | Surfactant | 225 |
| | | | Propylene Glycol | 290 |
| | | | Water | remaining |
| 12. | ditto | ditto | Glyphosate | 144 |
| | | | SILWET L-77 | 120 |
| | | | Surfactant | 72 |
| | | | Water | remaining |

| | | | | |
|---|---|---|---|---|
| 13. | ditto | ditto | Glyphosate | 180 |
| | | | SILWET L-77 | 188 |
| | | | Surfactant | 250 |
| | | | Dipropylene Glycol | 50 |
| | | | Water | remaining |
| 14. | ditto | ditto | Glyphosate | 155 |
| | | | SILWET L-77 | 310 |
| | | | Surfactant | 200 |
| | | | Dipropylene Glycol | 50 |
| | | | Water | remaining |
| 15. | polyoxyethylene tallowamine | 80 | Glyphosate | 144 |
| | | | SILWET L-77 | 120 |
| | | | Surfactant | 72 |
| | | | Dipropylene Glycol | 250 |
| | | | Water | remaining |
| 16. | dimethyl coco benzalkonium chloride | 50 | Glyphosate | 144 |
| | | | MON 0818 | 72 |
| | | | SILWET L-77 | 250 |
| | | | Surfactant | 200 |
| | | | Water | remaining |
| 17. | ouaternary ammonium chloride of polyoxyethylated fatty amines | 50 | Glyphosate | 144 |
| | | | SILWET L-77 | 120 |
| | | | Surfactant | 144 |
| | | | Water | remaining |
| 18. | N-lauryl pyridinium chloride | 45 | Glyphosate | 144 |
| | | | SILWET L-77 | 250 |
| | | | Surfactant | 225 |
| | | | Water | remaining |

| | | | | |
|---|---|---|---|---|
| 19. | bis(2-hydroxyethyl) tallowamine | 100 | Glyphosate | 144 |
| | | | SILWET L-77 | 250 |
| | | | Surfactant | 200 |
| | | | Water | remaining |
| 20. | trimethyl coco ammonium chloride | 70 | Glyphosate | 144 |
| | | | SILWET L-77 | 250 |
| | | | Surfactant | 200 |
| | | | Water | remaining |
| 21. | trimethyl octadecyl ammonium chloride | 70 | Glyphosate | 144 |
| | | | SILWET L-77 | 250 |
| | | | Surfactant | 200 |
| | | | Water | remaining |
| 22. | lauryl dimethyl betaine | 35 | Glyphosate | 144 |
| | | | SILWET L-77 | 250 |
| | | | Surfactant | 340 |
| | | | Water | remaining |

This invention also includes a method of killing or controlling weeds by applying a herbicidally effective amount of the composition of this invention to the locus of the plant or weed to be killed or controlled. Dilution with water before application to the locus of the plant or weed is desirable, although perhaps not necessary in all cases. In general when killing or controlling weeds or plants using this invention, the methods of use generally disclosed in U.S. Patent 3,799,458 for salts and compositions employing N-phosphonomethylglycine and the other patents referred to hereinabove will be useful to those of skill in the art.

The application of an effective amount of the herbicidally effective compounds used in the compositions of this invention to the plant is essential for the practice of the present invention. The exact amount of herbicide containing N-phosphonomethylglycine as the active ingredient to be employed is dependent upon the response desired in the plant, as well as such other factors as the plant species and stage of development thereof, and the amount of rainfall, as well as the specific salt employed. In foliar treatment for the control of vegetative growth, the active ingredients are applied in amounts from about 0.01 to about 20 or more pounds per acre. In applications for the control of aquatic plants, the active ingredients are applied in amounts of from about 0.01 parts per million to about 1000 parts per million, based on the aquatic medium. An effective amount for phytotoxic or herbicidal control is that amount necessary for overall or selective control, i.e. a phytotoxic or herbicidal amount. It is believed that one skilled in the art can readily determine from the teachings of this specification, and patents referred herein the approximate application rate. Granules may also be applied using conventional broadcast techniques.

The following examples of application are presented to illustrate the present invention, as well as some of the various embodiments of the invention. These examples are presented as being illustrative of the herbicidal use thereof and are not intended to be a limitation of the scope of this invention. All percentages in the following examples are on a weight basis unless otherwise indicated.

Table 2 provides bioefficacy results of Glyphosate salts/L-77 tests done for a series of examples, some are comparative and some examples illustrate this invention.

Table 3 is a second table analogous to table 2 which provides bioefficacy results of the formulations of this invention along with efficacy data for comparative purposes.

Table 4 provides bioefficacy data for a series of titration for a formulation comprising glyphosate salt (isopropylamine), surfactant An Super and Silwet L-77 at 16 days after treatment.

**Table 2**

Results of Glyphosate/L-77 Formulation Tests

| | Product | Rate L/ha | Water volume L/ha | Rainfall mm | Hours AA | Efficacy (%) 3DAT* | 8 DAT | 14 DAT | 35 DAT |
|---|---|---|---|---|---|---|---|---|---|
| 1. | Example 16 | 10 | 500 | | | 75 | 83 | 85 | 93 |
| 2. | Example 16 | 10 | 500 | 20 | 1.5 | 70 | 65 | 65 | 65 |
| 3. | Roundup + L-77 | 4 + 0.5% | 500 | | | 70 | 78 | 85 | 93 |
| 4. | Roundup + L-77 | 4 + 0.5% | 500 | 20 | 1.5 | 70 | 75 | 75 | 80 |
| 5. | Roundup | 4 | 500 | | | 45 | 70 | 78 | 85 |
| 6. | Roundup | 4 | 500 | 20 | 1.5 | 10 | 0 | 0 | 0 |
| 7. | Example 17 | 10 | 150 | | | 70 | 80 | 90 | 93 |
| 8. | Example 17 | 10 | 150 | 20 | 1.5 | 50 | 65 | 75 | 80 |
| 9. | Example 18 | 10 | 150 | | | 65 | 75 | 90 | 97 |
| 10. | Example 18 | 10 | 150 | 20 | 1.5 | 30 | 40 | 50 | 50 |
| 11. | Example 22 | 10 | 150 | | | 58 | 68 | 85 | 93 |
| 12. | Example 22 | 10 | 150 | 20 | 1.5 | 40 | 40 | 60 | 70 |
| 13. | Roundup + L-77 | 4 + 0.75% | 150 | | | 60 | 65 | 83 | 93 |
| 14. | Roundup + L-77 | 4 + .75% | 150 | 20 | 1.5 | 40 | 40 | 60 | 70 |
| 15. | Roundup | 4 | 150 | | | 55 | 68 | 88 | 93 |
| 16. | Roundup | 4 | 150 | 20 | 1.5 | 0 | 0 | 0 | 0 |
| 17. | Roundup | 5.5 | 150 | | | 63 | 70 | 93 | 95 |

* Burndown action
Plot size: 10 $m^2$
Replication: 2
Weed: Panicum repen:
(high/density) (50 70 cm, 90%)

**Table 3**

Results of Glyphosate/L-77 Formulation Tests

| | Product | Rate L/ha | Water volume L/ha | Rainfall mm | Hours AA | Efficacy (%) 3DAT* | 8 DAT | 14 DAT | 35 DAT |
|---|---|---|---|---|---|---|---|---|---|
| 1. | Example 16 | 10 | 500 | | | 70 | 80 | 85 | 90 |
| 2. | Example 16 | 10 | 500 | 20 | 1.5 | 60 | 65 | 70 | 80 |
| 3. | Roundup + L-77 | 4 + 0.5% | 500 | | | 70 | 80 | 80 | 85 |
| 4. | Roundup + L-77 | 4 + 0.5% | 500 | 20 | 1.5 | 60 | 70 | 65 | 75 |
| 5. | Roundup | 4 | 500 | | | 30 | 60 | 60 | 70 |
| 6. | Roundup | 4 | 500 | 20 | 1.5 | 10 | 0 | 0 | 0 |
| 7. | Example 17 | 10 | 150 | | | 68 | 80 | 83 | 93 |
| 8. | Example 17 | 10 | 150 | 20 | 1.5 | 45 | 60 | 70 | 80 |
| 9. | Example 18 | 10 | 150 | | | 65 | 77 | 78 | 88 |
| 10. | Example 18 | 10 | 150 | 20 | 1.5 | 30 | 30 | 30 | 40 |
| 11. | Example 22 | 10 | 150 | | | 67 | 73 | 75 | 87 |
| 12. | Example 22 | 10 | 150 | 20 | 1.5 | 60 | 65 | 65 | 80 |
| 13. | Roundup + L-77 | 4 + 0.75% | 150 | | | 70 | 75 | 75 | 85 |
| 14. | Roundup + L-77 | 4 + .75% | 150 | 20 | 1.5 | 50 | 60 | 70 | 70 |
| 15. | Roundup | 4 | 150 | | | 50 | 65 | 65 | 80 |
| 16. | Roundup | 4 | 150 | 20 | 1.5 | 10 | 10 | 5 | 5 |
| 17. | Roundup | 5.5 | 150 | | | 65 | 75 | 80 | 95 |

* Burndown action
Plot size: 10 $m^2$
Replication: 2
Weed: Panicum repens
(high/density) (50-70 cm, 90%)

DPG = Diproplyene glycol

**Table 4**

| | Chemicals | Rate % Volume | Chemicals | Rate % Volume | Chemicals | Rate % Volume | % INHIBITION S.m. | L.a. | V.a. | C.r. | O.c. |
|---|---|---|---|---|---|---|---|---|---|---|---|
| 1. | W.C. | | | | | | 60 | 40 | 45 | 83 | 25 |
| 2. | Glyphosate* | 3.60 | MON 0818** | 0.87 | | | 100 | 100 | 100 | 63 | 40 |
| 3. | Glyphosate* | 1.80 | MON 0818 | 1.74 | | | 100 | 99 | 100 | 53 | 40 |
| 4. | Glyphosate | 3.60 | AN Super*** | 0.10 | L-77 | 0.00 | 100 | 100 | 100 | 90 | 70 |
| 5. | Glyphosate | 3.60 | AN Super | 0.50 | L-77 | 0.00 | 100 | 100 | 100 | 83 | 85 |
| 6. | Glyphosate | 3.60 | AN Super | 1.00 | L-77 | 0.00 | 100 | 100 | 100 | 75 | 90 |
| 7. | Glyphosate | 3.60 | AN Super | 1.50 | L-77 | 0.00 | 100 | 100 | 100 | 83 | 90 |
| 8. | Glyphosate | 1.80 | AN Super | 0.10 | L-77 | 0.00 | 100 | 100 | 100 | 70 | 40 |
| 9. | Glyphosate | 1.80 | AN Super | 0.50 | L-77 | 0.00 | 100 | 100 | 100 | 58 | 50 |
| 10. | Glyphosate | 1.80 | AN Super | 1.00 | L-77 | 0.00 | 99 | 99 | 99 | 48 | 50 |
| 11. | Glyphosate | 1.80 | AN Super | 1.50 | L-77 | 0.00 | 100 | 100 | 100 | 70 | 70 |
| 12. | Glyphosate | 0.00 | AN Super | 0.10 | L-77 | 0.00 | 20 | 30 | 20 | 0 | 0 |
| 13. | Glyphosate | 0.00 | AN Super | 0.50 | L-77 | 0.00 | 90 | 100 | 90 | 0 | 0 |
| 14. | Glyphosate | 0.00 | AN Super | 1.00 | L-77 | 0.00 | 100 | 100 | 100 | 10 | 10 |
| 15. | Glyphosate | 0.00 | AN Super | 1.50 | L-77 | 0.00 | 100 | 100 | 100 | 28 | 30 |
| 16. | Glyphosate | 3.60 | AN Super | 0.00 | L-77 | 0.10 | 100 | 100 | 100 | 80 | 50 |
| 17. | Glyphosate | 3.60 | AN Super | 0.00 | L-77 | 0.50 | 100 | 100 | 100 | 78 | 60 |
| 18. | Glyphosate | 3.60 | AN Super | 0.00 | L-77 | 1.00 | 100 | 100 | 100 | 80 | 90 |
| 19. | Glyphosate | 3.60 | AN Super | 0.00 | L-77 | 1.50 | 100 | 100 | 100 | 83 | 90 |
| 20. | Glyphosate | 1.80 | AN Super | 0.00 | L-77 | 0.10 | 100 | 100 | 100 | 65 | 35 |
| 21. | Glyphosate | 1.80 | AN Super | 0.00 | L-77 | 0.50 | 100 | 100 | 100 | 60 | 30 |
| 22. | Glyphosate | 1.80 | AN Super | 0.00 | L-77 | 1.00 | 100 | 100 | 100 | 45 | 10 |
| 23. | Glyphosate | 1.80 | AN Super | 0.00 | L-77 | 1.50 | 100 | 100 | 100 | 68 | 20 |

| | | | | | | | | | | |
|---|---|---|---|---|---|---|---|---|---|---|
| 24. | Glyphosate | 0.00 | AN Super | 0.00 | L-77 | 0.10 | 10 | 0 | 20 | 0 | 0 |
| 25. | Glyphosate | 0.00 | AN Super | 0.00 | L-77 | 0.50 | 70 | 90 | 90 | 10 | 0 |
| 26. | Glyphosate | 0.00 | AN Super | 0.00 | L-77 | 1.00 | 90 | 93 | 88 | 8 | 0 |
| 27. | Glyphosate | 0.00 | AN Super | 0.00 | L-77 | 1.50 | 95 | 95 | 94 | 13 | 5 |
| 28. | Glyphosate | 3.60 | AN Super | 1.00 | L-77 | 0.10 | 100 | 100 | 100 | 80 | 50 |
| 29. | Glyphosate | 3.60 | AN Super | 1.00 | L-77 | 0.50 | 100 | 100 | 100 | 90 | 40 |
| 30. | Glyphosate | 3.60 | AN Super | 1.00 | L-77 | 1.00 | 100 | 100 | 100 | 88 | 50 |
| 31. | Glyphosate | 3.60 | AN Super | 1.00 | L-77 | 1.50 | 100 | 100 | 100 | 88 | 60 |
| 32. | Glyphosate | 1.80 | AN Super | 1.00 | L-77 | 0.10 | 100 | 100 | 100 | 60 | 15 |
| 33. | Glyphosate | 1.80 | AN Super | 1.00 | L-77 | 0.50 | 100 | 100 | 100 | 68 | 30 |
| 34. | Glyphosate | 1.80 | AN Super | 1.00 | L-77 | 1.00 | 100 | 100 | 100 | 70 | 40 |
| 35. | Glyphosate | 1.80 | AN Super | 1.00 | L-77 | 1.50 | 100 | 100 | 100 | 60 | 60 |
| 36. | Glyphosate | 0.00 | AN Super | 1.00 | L-77 | 0.10 | 100 | 100 | 100 | 20 | 40 |
| 37. | Glyphosate | 0.00 | AN Super | 1.00 | L-77 | 0.50 | 100 | 100 | 100 | 20 | 20 |
| 38. | Glyphosate | 0.00 | AN Super | 1.00 | L-77 | 1.00 | 100 | 100 | 100 | 20 | 30 |
| 39. | Glyphosate | 0.00 | AN Super | 1.00 | L-77 | 1.50 | 100 | 100 | 100 | 30 | 30 |
| 40. | Glyphosate* | 3.60 | MON 0818 | 1.00 | L-77 | 0.10 | 100 | 100 | 100 | 55 | 40 |
| 41. | Glyphosate* | 3.60 | MON 0818 | 1.00 | L-77 | 0.50 | 100 | 100 | 100 | 60 | 20 |
| 42. | Glyphosate* | 3.60 | MON-0818 | 1.00 | L-77 | 1.00 | 100 | 100 | 100 | 68 | 30 |
| 43. | Glyphosate* | 3.60 | MON 0818 | 1.00 | L-77 | 1.50 | 100 | 100 | 100 | 65 | 20 |

* = Isopropylamine salt of glyphosate and water

** = Tallowamine surfactant

*** AN Super = N-Octyl prydinium chloride

## Claims

1. A storage stable, preferably one package, aqueous composition comprising effective amounts of at least one glyphosate based herbicide, a silicone copolymer and an amphoteric or cationic surfactant wherein said amphoteric surfactant is selected from the group consisting of:
   amine oxides
   a) trialkylamine oxides
      i) lauryl dimethyl amine oxide
      ii) stearyl dimethyl amine oxide
   b) dihydroxyethyl alkyl amine oxide
      i) dihydroxyethyl octyl amine oxide
      ii) dihydroxyethyl dodecyl amine oxide
      iii) dihydroxyethyl tallowamine oxide
   c) di(polyhydroxyethylene) alkyl amine oxide
      i) bis(polyoxyethylene) tallowamine oxide
   d) loweralkyl polyoxyethylene alkyl amine oxide
      i) methyl polyoxyethylene (2 mole) cocoamine oxide and wherein said cationic surfactant is selected from the group consisting of:
   I. quaternized long chain amines:
      a) alkyl, triloweralkyl ammonium chloride
         i) trimethyl coco ammonium chloride (coco = $C_{12}$ - $C_{15}$ alkyl)
         ii) trimethyl octadecyl ammonium chloride
      b) diloweralkyl, alkyl, benzalkonium chloride
         i) dimethyl, coco benzalkonium chloride
   II. quaternized polyoxyalkylenated long chain amines:
      a) dialkyl dihydroxyethyl ammonium chloride
         i) methyl bis(2-hydroxyethyl) coco ammonium chloride
         ii) methyl bis(2-hydroxyethyl) lauryl ammonium chloride
         iii) methyl bis(2-hydroxyethyl) oleyl ammonium chloride
      b) alkyl di(polyoxyethylene) lower alkyl ammonium chloride
         i) methyl bis(omegahydroxypoly(oxyethylene)coco) ammonium chloride where the polyoxyethylene is derived from 3-20 moles of ethylene oxide
         ii) methyl bis(omegahydroxypoly(oxyethylene)oleyl) ammonium chloride where the polyoxyethylene is derived from 3-20 moles of ethylene oxide
      c) hydroxyalkyl polyoxyethylene diloweralkyl ammonium chloride
         i) hydroxyethyl dimethyl polyoxyethylene (2 moles) ammonium chloride
   III. quaternized pyridines
      i) N-octyl pyridine chloride
      ii) N-dodecyl pyridine chloride
   IV. trialkyl betaines
      a) alkyl, diloweralkyl betaines
         i) lauryl dimethyl betaine
         ii) stearyl dimethyl betaine
         iii) coco dimethyl betaine
         iv) decyl dimethyl betaine
   V. tertiary amines
      a) bis(polyoxyethylene) alkylamine
         i) bis(polyoxyethylene tallowamine where the polyoxyethylene is derived from 2-30 moles of ethylene oxide.
         ii) bis(polyoxyethylene coco amine where the polyoxyethylene is derived from 2-30 moles of ethylene oxide.

2. The composition of Claim 1 wherein said amphoteric surfactant is an amine oxide.

3. The composition of Claim 1 wherein said wetting agent is a silicone copolymer having the formula

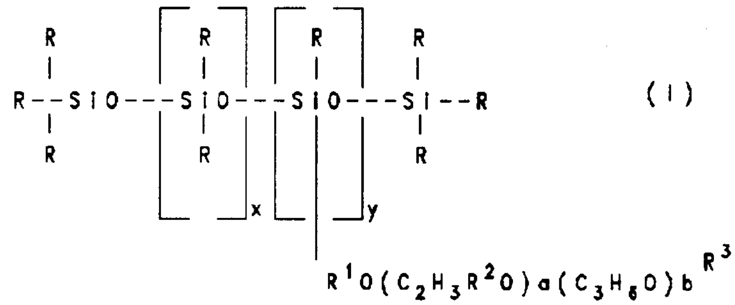

(I)

where each R is independently a monovalent hydrocarbyl radical, $R^1$ is a divalent hydrocarbylene radical, $R^2$ is independently hydrogen or a lower hydroxyalkyl radical, $R^3$ is hydrogen or a monovalent hydrocarbyl radical, and x, y, a and b are integers independently greater than or equal to zero.

4. The composition of Claim 3 wherein R and $R^3$ are $-CH_3$, $R^1$ is $-C_3H_6-$, $R^2$ is hydrogen, x is zero or one, y is one to five, a is five to twenty and b is zero.

5. The composition of Claim 3 wherein R and $R^3$ are $-CH_3$, $R^2$ is hydrogen, a is five to twenty and b is zero.

6. The composition of Claim 2 wherein said glyphosate salt is the isopropylamine salt, said wetting agent is L-77 and said amphoteric surfactant is selected from

amine oxide

a) trialkylamine oxide
   i) lauryl dimethyl amine oxide
   ii) stearyl dimethyl amine oxide
b) dihydroxyethyl alkyl amine oxide
   i) dihydroxyethyl octyl amine oxide
   ii) dihydroxyethyl dodecyl amine oxide
   iii) dihydroxyethyl tallowamine oxide
c) di(polyhydroxyethylene) alkyl amine oxide
   i) bis(polyoxyethylene) tallowamine oxide
d) loweralkyl polyoxyethylene alkyl amine oxide
   i) methyl polyoxyethylene (2 mole) coco amine oxide

7. The composition of Claim 2 wherein said glyphosate salt is the isopropylamine salt, said wetting agent is L-77 and said cationic surfactant is selected from

I. quaternized long chain amines:
   a) alkyl, triloweralkyl ammonium chloride
      i) trimethyl coco ammonium chloride (coco = $C_{12}$ - $C_{15}$ alkyl)
      ii) trimethyl octadecyl ammonium chloride
   b) diloweralkyl, alkyl, benzalkonium chloride
      i) dimethyl, coco benzalkonium chloride

II. quaternized polyoxyalkylenated long chain amines:
   a) dialkyl dihydroxyethyl ammonium chloride
      i) methyl bis(2-hydroxyethyl) coco ammonium chloride
      ii) methyl bis(2-hydroxyethyl) lauryl ammonium chloride
      iii) methyl bis(2-hydroxyethyl) oleyl ammonium chloride
   b) alkyl di(polyoxyethylene) lower alkyl ammonium chloride
      i) methyl bis(omegahydroxypoly-(oxyethylene)coco) ammonium chloride where the polyoxyethylene is derived from 3-20 moles of ethylene oxide
      ii) methyl bis(omegahydroxypoly(oxyethylene)oleyl) ammonium chloride where the polyoxyethylene is derived from 3-20 moles of ethylene oxide
   c) hydroxyalkyl polyoxyethylene diloweralkyl ammonium chloride
      i) hydroxyethyl dimethyl polyoxyethylene (2 moles) ammonium chloride

III. quaternized pyridines
   i) N-octyl pyridine chloride
   ii) N-dodecyl pyridine chloride

IV. trialkyl betaines
  a) alkyl, diloweralkyl betaines
    i) lauryl dimethyl betaine
    ii) stearyl dimethyl betaine
    iii) coco dimethyl betaine
    iv) decyl dimethyl betaine
V. tertiary amines
  a) bis(polyoxyethylene) alkylamine
    i) bis(polyoxyethylene tallowamine where the polyoxyethylene is derived from 2-30 moles of ethylene oxide.
    ii) bis(polyoxyethylene coco amine where the polyoxyethylene is derived from 2-30 moles of ethylene oxide.

**8.** The composition of Claim 6 wherein the percent glyphosate salt is in the range from about 5 to about 35, the percent L-77 is in the range from about 0.1 to about 50, and the percent cationic surfactant is in the range from about 1 to about 50.

**9.** The composition of Claim 8 wherein the percent glyphosate salt is in the range from about 5 to about 35, the percent L-77 is in the range from about 0.1 to about 50 and the percent cationic surfactant is in the range from about 1 to about 50.

**10.** The composition of Claim 9 wherein the percent glyphosate salt is in the range from about 5 to about 35, the percent L-77 is in the range from about 0.1 to about 50, and the percent amphoteric surfactant is in the range from about 1 to about 50.

**11.** A method of killing or controlling weeds by applying the composition of Claim 1 to the weed to be killed or controlled.

**12.** A method of killing or controlling weeds by applying the composition of Claim 2 to the weed to be killed or controlled.